(19) Europäisches Patentamt
European Patent Office
Office européen des brevets

(11) Publication number: **0 229 030 B1**

# EUROPEAN PATENT SPECIFICATION

(45) Date of publication of patent specification: **17.07.91**

(51) Int. Cl.⁵: **G21C 7/10, G21C 7/18**

(21) Application number: **87300068.1**

(22) Date of filing: **06.01.87**

(54) Nuclear reactor control rod with anually uniform changeable worth.

(30) Priority: **07.01.86 US 816780**

(43) Date of publication of application:
**15.07.87 Bulletin 87/29**

(45) Publication of the grant of the patent:
**17.07.91 Bulletin 91/29**

(84) Designated Contracting States:
**BE ES FR GB IT SE**

(56) References cited:
**DE-B- 1 049 014**
**DE-B- 1 151 608**
**FR-A- 1 256 186**
**FR-A- 1 475 017**
**FR-A- 2 400 751**

(73) Proprietor: **WESTINGHOUSE ELECTRIC COR-PORATION**
**Westinghouse Building Gateway Center**
**Pittsburgh Pennsylvania 15222(US)**

(72) Inventor: **Freeman, Thomas Raphael**
**31 Black Oak Drive RD 4**
**Greensburg, PA 15601(US)**

(74) Representative: **van Berlyn, Ronald Gilbert**
**23, Centre Heights**
**London, NW3 6JG(GB)**

## Description

The present invention relates generally to fuel assemblies for nuclear reactors and, more particularly, to a control rod permitting its worth to be changed, the "worth" of a control rod being understood in the art as the excess multiplication (or reactivity) that can be controlled by the rod when it is fully inserted.

In a typical pressurelightwater nuclear reactor, the reactor core includes a large number of fuel assemblies each comprising top and bottom nozzles, a plurality of elongate transversely spaced guide thimbles extending longitudinally between the nozzles, a plurality of transverse support grids axially spaced along and attached to the guide thimbles, and a plurality of elongate fuel elements or rods transversely spaced from one another and from the guide thimbles and supported by the transverse grids between the top and bottom nozzles. The fuel rods which contain fissile material are grouped together in an array organized to provide sufficient neutron flux in the core to support a high rate of nuclear fission and thus the release of a large amount of energy in the form of heat. A liquid coolant, which is light water, is pumped upwardly through the core in order to extract therefrom some of the heat for use in producing useful work.

Since the rate of heat generation in the reactor core is proportional to the nuclear fission rate and this, in turn, is determined by the neutron flux in the core, control of heat generation at reactor startup, during its operation, and at shutdown is achieved by varying the neutron flux. Generally, this is done by absorbing excess neutrons using control rods which contain neutron absorbing material. The guide thimbles, in addition to being structural elements of the fuel assembly, also provide channels for the insertion of the neutron absorbing control rods into the reactor core. The level of neutron flux and, thus, the heat output of the core are normally regulated through movement of the control rods into and from the guide thimbles.

One common arrangement utilizing control rods in association with a fuel assembly is illustrated in Applicant's U.S.-A-4,326,919 showing an array of control rods supported at their upper ends by a spider assembly which, in turn, is connected to a control rod drive mechanism operable to raise and lower (known as a stepping action) the control rods into and out of the guide thimbles of the fuel assembly. Typically, a control rod for use in such an arrangement consists of an elongate metallic cladding tube containing a neutron absorbing material and sealed at its opposite ends by means of end plugs. Usually, the neutron absorbing material is in the form of a stack of closely packed ceramic or metallic pellets which fill the cladding tube only partially so as to leave between the stack of pellets and the upper end plug a space defining a plenum chamber for receiving gases generated during operation. A coil spring is disposed within this plenum chamber and is held in a state of partial compression to maintain the pellets firmly packed during stepping of the control rod.

Thus, control rods affect reactivity by changing direct neutron absorption, and they are used for fast reactivity control, a chemical shim, such as boric acid dissolved in the coolant, being employed to control long-term reactivity changes. The boron solution leads to a more uniform power distribution and fuel depletion than do control rods since it is uniformly distributed throughout the core, the concentration of boron normally being reduced with core age to compensate for fuel depletion and fission product buildup.

The buildup of fission products, such as Xenon-135, reduces reactivity by parasitically absorbing neutrons, thereby decreasing thermal utilization. The Xenon-135 (hereafter referred to as just "xenon") is removed by neutron absorption or by decay. Upon a reduction in core power (such as occurs during load follow, which is a reduction in reactor power in response to a reduction in power demand), fewer thermal neutrons are available to remove the xenon and, therefore, the concentration of xenon in the core increases.

This increase in xenon concentration which accompanies a reduction in core reactivity is usually compensated for either by decreasing the concentration of boron dissolved in the core coolant or by withdrawing the control rods from the core. However, both of these methods requires the processing of coolant (i.e., water) which is difficult and not desired by the utility, especially towards the end of core life (EOL), and the removal of control rods means that the core's return to power capability is reduced and peaking factors are increased.

The usual solution to this problem is to employ several banks of reduced-worth rods (i.e., grey rods) in the core at full power and subsequently, at reduced power, to remove t hem so as to compensate for the xenon buildup. The drawback of this procedure is that moving these banks changes the axial offset and increases peaking factors. Furthermore, the presence of these banks of rods in the core at power can affect the shutdown margin.

FR-A-1475017 discloses a control rod comprising two rod members one of which is highly neutron absorbent to act wholly as a "black" rod, and the other of which is less neutron absorbent to act wholly as a "grey" rod, the two rod members being coaxial with each other and with a guide tube associated therewith, and being axially movable with respect to one another in a manner rendering the black rod effective for use during reactor start-up and shut-down, and rendering the grey rod effective for use during normal reactor operation. The intended purpose of thus combining a black rod member and a grey rod member in a single assembly cooperable with one guide tube is to improve the utilization factor of the control rod in the reactor core.

DE-B-1049014 concerns a nuclear reactor having a central bore in which is mounted a control mechanism comprising overlapping absorber and/or moderator plates or tubes each provided with an array of openings formed in the plates or tube walls, respectively. Reactivity changes are effected, by means of this mechanism, through axial or rotational relative displacement of the control elements with respect to one another and in a manner such as to cause the overlap between their openings and solid regions, hence the efficacy of the control elements as such, to be altered.

Finally in FR-A-1256186 there is disclosed a control and shut-down device comprising a coaxial arrangement of two control elements, namely, an outer tubular element having axial zones alternately filled with fissile material and empty (or filled with moderator material), and an inner rod which has axial zones composed alternately of absorber material and non-absorbing (e.g. moderator) material and which is axially movable relative to the tubular element between a normal operating position in which its absorber zones are completely shielded by the fissile zones of the tubular element, and a shut-down position in which its absorber zones are completely exposed.

These conventional control rod assemblies are designed and intended strictly for use as reactivity control devices to be introduced in a reactor core and to remain therein for the whole duration of a fuel cycle.

The present invention has for its principal object to provide a control rod capable of being used to compensate for xenon build-up without creating other problems or imposing a fuel cycle penalty.

The invention accordingly resides in a control rod as claimed in claim 1 or in any of the subordinated claims appended thereto.

Underlying the invention is the realization that, since the xenon increase at reduced power will be fairly uniform across the core and, in particular, will be axially symmetrical (if the axial offset is near zero and held constant at reduced power), the ideal xenon compensation solution should be uniform across the core and in particular should also be symmetrical in the axial direction. In other words, the solution should match the characteristics of the problem.

The solution provided by the invention does just that. It involves the full insertion, into the core, of a control rod the worth of which can be changed uniformly in the axial direction during power operation, and which control rod can be readily removed from the core before EOL (end of life) so as not to impose a fuel cycle penalty. More particularly, the control rod embodying the invention comprises two cylindrical members, an outer one of annular cross-section and an inner one of solid cross-section fitting inside the outer one. In the axial direction, each cylindrical member has successive regions alternately composed of a black poison (i.e., one that absorbs all neutrons) and no poison. The two cylindrical members of the control rod are axially movable relative to each other, and such movement thereof will change the worth of the rod by up to a factor of 2 depending upon the extent to which the poison regions of the two cylindrical members line up with one another. The reason for this is that, when lined up, the black poison regions of the outer cylindrical member will shield the poison regions of the inner cylindrical member from neutrons, thus reducing the worth of the overall rod. Since the position and non-poison regions alternate uniformly in the axial direction between the ends of the cylindrical member, the worth of the overall rod will change approximately uniformly in the axial direction when the position of one cylindrical member is axially changed relative to another cylindrical member.

Also, since the cylindrical member needs to be moved only a short distance in order to change the rod worth, there will be very little axial offset change when the rod worth changes and, consequently, little peaking factor increase. Thus, the use of this dual-concentric-cylindrical member control-rod will be about as good as changing boron concentration for xenon transient compensation as far as peaking factors are concerned. It will be better than dissolved boron for speed of action especially near EOL.

A preferred embodiment of the invention will now be described, by way of example, with reference to the accompanying drawings, in which:

Figure 1 is a side elevational view, with parts partially sectioned and broken away for the purpose of clarity, of a nuclear fuel assembly which may employ control rods embodying the invention;

Figure 2 is an enlarged fragmentary detailed sectional view of one of the guide thimbles of the fuel assembly of Figure 1, adapted for use together with a control rod according to the invention;

Figure 3 is a sectional view taken along line 3-3 of Figure 2;

Figure 4 is an enlarged elevational view, in vertically foreshortened form, of the inner member of a control rod embodying the invention;

Figure 5 is a sectional view taken along line 5-5 of Figure 4;

Figure 6 is an enlarged elevational view, in vertically foreshortened form, of the outer member of the control rod;

Figure 7 is a sectional view taken along line 7-7 of Figure 6;

Figure 8 is an enlarged elevational view in vertically foreshortened and longitudinally sectioned form, of the complete control rod composed of two members telescoped one into the other;

Figure 9 is a sectional view taken along line 9-9 of Figure 8;

Figure 10 is a bottom plan view of the control rod as seen along line 10-10 of Figure 8;

Figure 11 is a view similar to Figure 8 but showing the control rod inserted into the guide thimbles; and

Figure 12 is a view similar to Figure 11 but showing the control rod with the inner member displaced downwardly relative to the outer member and with the latter resting upon an annular stop within the guide thimble.

In the following description, like reference characters designate like or corresponding parts throughout the several views, and terms such as "forward", "rearward", "left", "right", "upwardly", "downwardly", and the like, are used as words of convenience not to be construed as limiting terms.

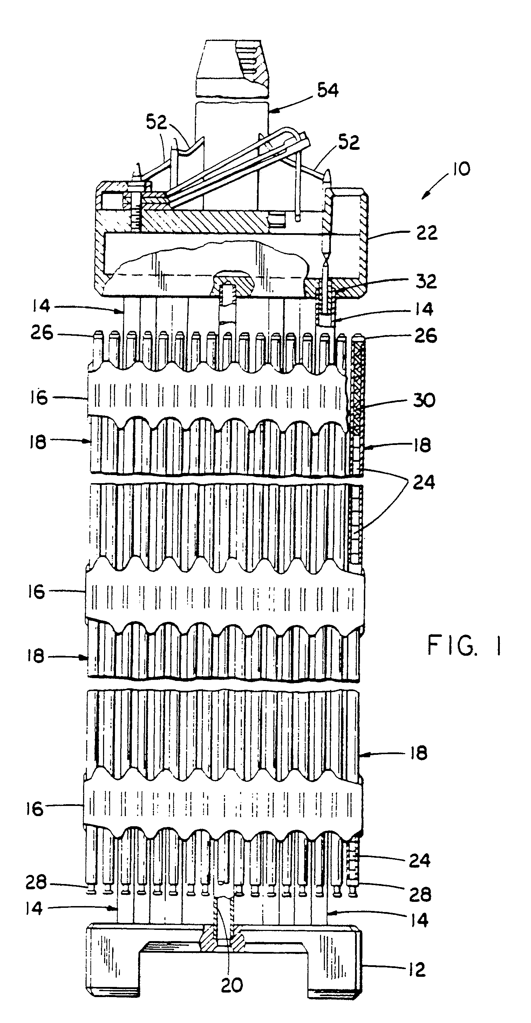

Referring now to the drawings, and particularly to Figure 1, the fuel assembly shown therein and generally designated with reference numeral 10 comprises basically a lower end structure or bottom nozzle 12 for supporting the assembly on the lower core plate (not shown) in the core region of a nuclear reactor (not shown), and longitudinally extending guide tubes or thimbles 14 projecting upward from the bottom nozzle 12, transverse grids 16 axially spaced along the guide thimbles 14, an organized array of elongate fuel rods 18 transversely spaced and supported by the grids 16, an instrumentation tube 20, and an upper end structure or top nozzle 22 removably attached to the upper ends of the guide thimbles 14. Each fuel rod 18 contains nuclear fuel pellets 24 and has its opposite ends sealed by means of end plugs 26, 28. A plenum spring 30 disposed between the upper end plug 26 and the pellets 24 maintains the pellets firmly stacked.

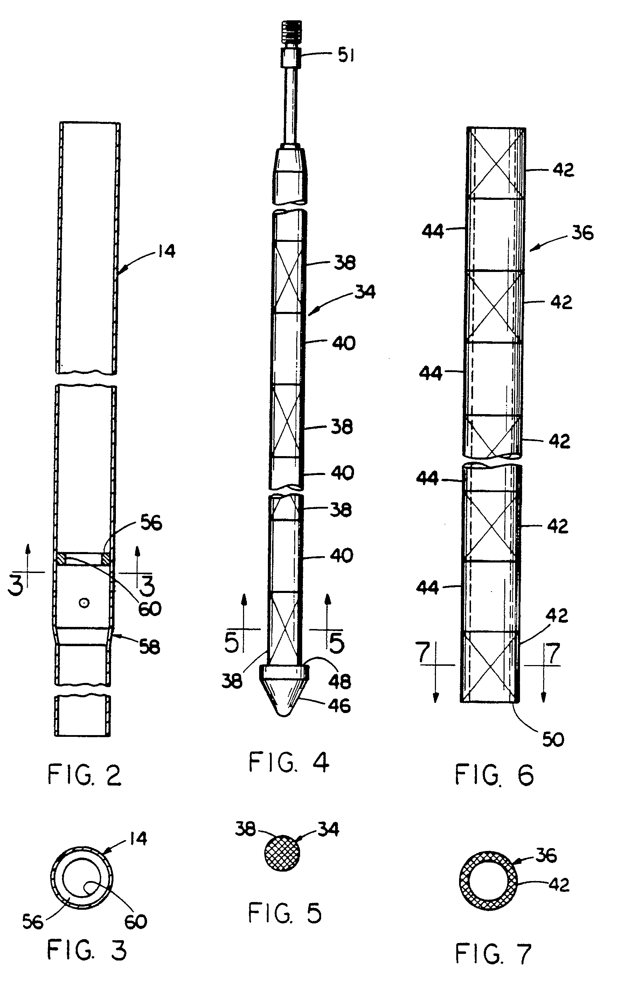

Referring now to Figures 4 to 12, the control rod shown therein as a preferred embodiment of the invention, and generally designated 32, is adapted to be used in a fuel assembly, such as the assembly 10, for the purpose of compensating for xenon transients occurring during load-follow when the reactivity of the reactor core is reduced. As will become clear from the following description, the control rod 32 constitutes a means which compensates for the reduction in reactivity in a manner which matches it generally uniformly in a transverse direction and symmetric in the axial direction. Basically, the control rod 32 comprises an elongate inner member 34 and an elongate outer member 36 surrounding the inner member, each of which members 34, 36 is composed of alternating poison and nonpoison regions 38, 40 and 42, 44, respectively (in Figures 4 and 6, the poison regions are marked "X"), and which members 34, 36 are axially movable relative to each other so as to adjust the degree to which the poison regions 38, 42 of the members 34, 36 overlap with the nonpoison regions 40, 44 thereof, thereby to change the overall worth of the rod 32.

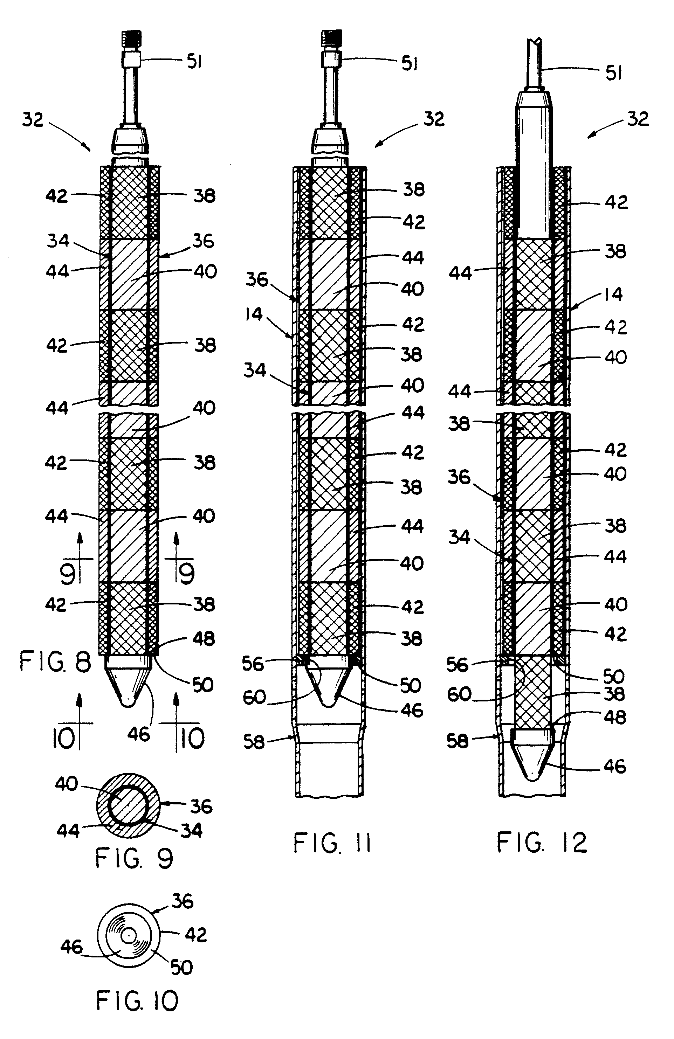

More particularly, the inner member 34 is a cylindrical member having a solid cross-section (see Figure 5) throughout its length, and the outer member 36 is a hollow cylindrical member having an annular cross-section (see Figure 7) throughout its length, the two members being disposed concentrically one within the other and of similar lengths (see Figure 8). The poison regions 38, 42 of the respective members 34, 36 are composed exclusively of black poison material, such as unclad hafnium, and they extend axially in an alternating arrangement with the nonpoison regions 40, 44, respectively, which are composed exclusively of a nonpoison material, such as Zirc-4. The regions of the respective members can be in the form of poison and nonpoison annular and solid pellets joined together in a suitable manner, such as through welding. It should be noted that no cladding material and no plenum are needed since no oxide material is used and, thus, no reaction gas is given off. As seen from Figure 8, the black poison regions 38, 42 of the inner and outer members 34, 36 and the nonpoison regions 40, 44 of the members 34, 36 have substantially the same axial dimension respectively. Preferably, each poison region 38, 42 also has about the same axial dimension as each nonpoison region 40, 44, such as 30 cm, for example, which is considered to be short enough not to cause significant axial offset changes with rod movement. The inner member 34 has adjacent its lower end a conical lower head 46 which defines an outwardly projecting annular ledge or shoulder 48 cooperable with the lower end 50 of the outer member 36 to support the latter prior to and during insertion of the control rod 32 into one of the guide thimbles 14 and during withdrawal of the control rod therefrom.

The control rod 32 is placed in a guide thimble 14 of the fuel assembly 10 at the beginning of core life (BOL). For this purpose, the member 34 has an upper portion 51 provided with a threading for connecting the control rod 32 to a radial fluke or arm 52 of a conventional spider assembly 54 (Figure 1) in the same manner as a conventional control rod. As spider assembly having the inner cylindrical member 34 of the control rod 32 connected thereto is lowered to insert the latter into the associated guide thimble 14, the outer cylindrical member 36, resting upon the lower ledge 48 on the inner member 34, will move along together with the inner member 34 until both members 34 and 36 are almost completely inserted in the guide thimble 14 hence in the reactor core, at which moment the lower edge 50 of the outer member 36 will encounter an annular stop 56 in the form of a stationary sleeve disposed in a lower portion of the guide thimble 14 just above a dashpot portion 58 thereof (see also Figures 2 and 3). The sleeve 56 is sized to abut the lower edge 50 of the outer member 36 and has a central hole 60 large enough to allow the inner member 34 to pass therethrough.

With the outer member 36 seated upon the stop 56, the inner member 34 can continue to move, relative thereto, downward to full insertion (Figure 12), an additional distance corresponding substantially to the axial dimension of each poison or nonpoison region of either member 34 or 36, viz. about 30 cm in the example given above. In such offset position of the members 34, 36, relative to each other and, hence, of the poison 38, 42 relative to the nonpoison regions 40, 44, the control rod 32 has its maximum worth. At full reactor power, the members 34, 36 are in this offset position.

When it is desired to reduce the overall worth of the rod 32, the inner member 34 is moved, relative to the outer member 36, upwards from the fully offset position thereof. The control rod 32 has its minimum worth when the poison and nonpoison regions 38, 40 of the inner member 34 are aligned with the poison and nonpoison regions 42, 44, respectively, of the outer member 36, as seen in Figure 11, since the poison regions 42 of the outer member 36 then shield the poison regions 38 of the inner member 34 from neutrons. Summing up, the inner member 34 is axially movable relative to the outer member 36 between an upper axially displaced position (Figure 12) in which the black poison regions 38, 42 of the members 34, 36 are aligned side-by-side with respect to each other and the nonpoison regions 40, 44 thereof are aligned side-by-side with respect to each other, and a lower axially displaced position (Figure 11) in which the black poison regions 38, 42 of the members 34, 36 are aligned side-by-side with the nonpoison regions 40, 44 thereof. This arrangement permits the overall worth of the control rod 32 to be changed in a substantially axially uniform manner.

While the annular sleeve 56 affixed to the guide thimble 14 interiorly thereof is shown herein as the means holding the outer member 36 stationary within the guide thimble 14 while allowing the inner member 34 to be axially moved between the aligned and offset positions of the poison and non-poison regions 38, 42 and 40, 44 shown in Figures 11 and 12, respectively, it will be readily understood that other means could be used for the same purpose. For example, a stop (not shown) on the top nozzle could be employed to hold the outer cylindrical member 36 stationary in the guide thimble 14.

Xenon-compensating control rods, such as the rod disclosed herein, are not used for power reduction because they do not control the change in axial offset which results as power is decreased. However, these rods might be used also to compensate for the Doppler reactivity which is changed during load-follow since these changes are also symmetric in the axial direction. If Doppler control is to be performed, the rods would not be in their most absorbing condition at full power so that their worth could be increased at reduced power to cancel the Doppler reactivity increase.

For use just in xenon control, the rods are at their highest worth position at full power, as mentioned above. At reduced power, their worth would be decreased to compensate for the xenon concentration buildup. Since the regular control rods inserted to reduce power do not have to be withdrawn in order to compensate for xenon, there is enough worth in the core to enable it to be returned to full power as fast as permissible. The xenon compensating rods therefore preserve the return to power capability, and they eliminate the need to change the dissolved-boron concentration in the core during load-follow. Moreover, the rods are removed before EOL so that there is no fuel cycle penalty associated with their being in the core. They may not all be withdrawn at once, but in stages.

## Claims

1. A control rod (32) insertable into a guide thimble (14) of a nuclear fuel assembly to provide xenon compensation, comprising an elongate inner member (34) and an elongate hollow outer member (36) surrounding the inner member (34), each of the inner and outer members (34,36) being composed of axially extending and alternating poison regions (38,42) and non-poison regions (40,44) of substantially equal axial dimensions, and the degree of overlap of which determines the overall worth of the control rod, one (34) of said inner and outer members (34,36) being axially movable, relative to the other member (36), between a maximum-worth position in which its poison regions (38) and non-poison regions (40) are substantially aligned side-by-side with the non-poison regions (44) and poison regions (42), respectively, of the other member, and a minimum-worth position in which its poison regions (38) and non-poison regions (40) are substantially aligned side-by-side with the poison regions (42) and non-poison regions (44), respectively, of said other member, said one member (34) having a ledge (48) formed thereon adjacent the end thereof which is its lower end when the control rod is inserted in said guide thimble (14), and said ledge (48) being spaced below the corresponding end (50) of the other member (36) when said one member (34) is in said maximum-worth position, and, when said one member (34) is in said minimum-worth position, being engaged with said corresponding end (50) of the other member so as to support the latter for simultaneous movement thereof together with said one member (34) during insertion and removal of the control rod (32) into and from said guide thimble.

2. A control rod according to claim 1, characterized in that said inner member (34) is a rod-like member having a solid cross-section throughout its length, and said outer member (36) is a tubular member which has an annular cross-section throughout its length and extends coaxially with respect to said rod-like member.

3. A control rod according to claim 1 or 2, characterized in that the poison regions (38,42) of each of said inner and outer members (34,36) are composed exclusively of a black poison material, and the non-poison regions (40,44) of each of said inner and outer members (34,36) are composed exclusively of a non-poison material.

4. A control rod according to claim 1, 2 or 3, characterized in that said hollow outer member (36) is held stationary when the control rod (32) is in its inserted position within said guide thimble (14).

5. A control rod according to claim 4, characterized in that said hollow outer member (36) is held stationary by an annular sleeve (56) disposed in a fixed position within said guide thimble (14) in a lower portion thereof, said annular sleeve (56) cooperating with the adjacent end (50) of the hollow outer member (36) to support the latter, and defining a hole (60) large enough to enable said inner member (34) to movably extend therethrough.

6. A control rod according to claim 5, characterized in that said annular sleeve (56) is located above a dashpot (58) defined in said guide thimble (14).

**Revendications**

1. Barre (32) de contrôle apte à être insérée dans un tube (14) de guidage d'un assemblage combustible nucléaire afin d'assurer la compensation du xénon, comprenant un élément (34) interne de forme allongée et un élément (36) externe creux de forme allongée entourant l'élément (34) interne, chacun des éléments (34, 36) interne et externe se composant de régions de poison (38, 42) et de régions sans poison (40, 44) s'étendant axialement et disposées en alternance, de dimensions axiales sensiblement égales, et présentant un degré de chevauchement qui détermine la valeur globale de la barre de contrôle, l'un (34) desdits éléments (34, 36) interne et externe étant axialement mobile par rapport à l'autre élément (36), entre une position de valeur maximale dans laquelle ses régions (38) de poison et ses régions (40) sans poison sont sensiblement alignées côte à côte avec les régions (44) sans poison et les régions (42) de poison, respectivement, de l'autre élément, et une position de valeur minimale dans laquelle ses régions (38) de poison et ses régions (40) sans poison sont sensiblement alignées côte à côte avec les régions (42) de poison et les régions (44) sans poison, respectivement, dudit autre élément, ledit élément (34) comportant un rebord (48) formé sur lui au voisinage de son extrémité qui constitue son extrémité inférieure lorsque la barre de contrôle est insérée dans ledit tube (14) de guidage, ledit rebord (48) étant situé à distance en dessous de l'extrémité (50) correspondante de l'autre élément (36) lorsque ledit élément (34) est dans ladite position de valeur maximale, et, lorsque ledit élément (34) est dans ladite position de valeur minimale, étant engagé avec ladite extrémité (50) correspondante de l'autre élément de façon à supporter ce dernier en vue de son déplacement simultané avec ledit autre élément (34) pendant l'insertion et le retrait de la barre (32) de contrôle dans et hors dudit tube de guidage.

2. Barre de contrôle selon la revendication 1, caractérisée en ce que ledit élément (34) interne est un élément en forme de barre ayant une section transversale pleine sur toute sa longueur, et en ce que ledit élément (36) externe est un élément tubulaire présentant une section transversale annulaire sur toute sa longueur et s'étendant coaxialement par rapport audit élément en forme de barre.

3. Barre de contrôle selon la revendication 1 ou la revendication 2, caractérisée en ce que les régions (38, 42) de poison de chacun desdits éléments (34, 36) interne et externe se composent exclusivement d'un poison noir et les régions (40, 44) sans poison de chacun desdits éléments (34, 36) interne et externe se composent exclusivement d'une matière sans poison.

4. Barre de contrôle selon les revendications 1, 2 ou 3, caractérisée en ce que ledit élément (36) externe creux est maintenu en position fixe lorsque la barre (32) de contrôle est dans sa position d'insertion à l'intérieur dudit tube (14) de guidage.

5. Barre de contrôle selon la revendication 4, caractérisée en ce que ledit élément (36) externe creux est maintenu en position fixe à l'aide d'un manchon (56) annulaire disposé dans une position fixe à l'intérieur dudit tube (14) de guidage dans une partie inférieure de celui-ci, ledit manchon (56) annulaire coopérant avec l'extrémité (50) voisine de l'élément (36) externe creux en vue de supporter ce dernier, et définissant un orifice (60) suffisamment grand pour permettre audit élément (34) interne de s'étendre à travers lui de façon mobile.

6. Barre de contrôle selon la revendication 5, caractérisée en ce que ledit manchon (56) annulaire est situé au-dessus d'une partie d'amortissement (58) définie dans ledit tube (14) de guidage.

**Patentansprüche**

1. Steuerstab (32) zum Einfügen in ein Steuerstabführungsrohr (14) eines nuklearen Brennelements zum Gewährleisten von Xenonkompensation, der ein längliches inneres Bauteil (34) und ein längliches hohles äußeres Bauteil (36), das das innere Bauteil (34) umgibt, enthält, wobei jedes der inneren und äußeren Bauteile (34, 36) aus sich axial erstreckenden und abwechselnden giftigen Bereichen (38, 42) und ungiftigen Bereichen (40, 44) von im wesentlichen gleichen axialen Abmessungen zusammensetzt und deren Grad des Überlappens den Gesamtwert des Steuerstabes bestimmt, wobei ein Bauteil (34) der inneren und äußeren Bauteile (34, 36) relativ zu dem anderen Bauteil (36) axial bewegbar ist zwischen einer Maximalwertposition, in der seine giftigen Bereiche (38) und ungiftigen Bereiche (40) im wesentlichen Seite an Seite mit den jeweiligen ungiftigen Bereichen (44) und giftigen Bereichen (42) des anderen Bauteils ausgerichtet sind und einer Minimalwertposition, in der seine giftigen Bereiche (38) und ungiftigen Bereiche (40) im wesentlichen Seite an Seite mit den jeweiligen giftigen Bereichen (42) und ungiftigen Bereichen (44) des anderen Bauteils ausgerichtet sind, wobei das eine Element (34) einen benachbart zu seinem Ende geformten Absatz (48) aufweist, wobei dieses sein unteres Ende ist, wenn der Steuerstab in das Steuerstabführungsrohr (14) eingeführt ist, und wobei der Absatz (48) mit Abstand unterhalb des entsprechenden Endes (50) des anderen Bauteiles (36) angeordnet ist, wenn das eine Bauteil (34) in der Maximalwertposition ist und er, wenn das eine Bauteil (34) in seiner Minimalwertposition ist, mit dem entsprechenden Ende (50) des anderen Bauteiles derart in Verbindung steht, daß er das letztere für dessen gleichzeitige Bewegung zusammen mit dem einen Bauteil (34) während dem Einfügen und Entfernen des Steuerstabs (32) in und aus dem Steuerstabführungsrohr unterstützt.

2. Steuerstab nach Anspruch 1, dadurch gekennzeichnet, daß das innere Bauteil (34) ein stabförmiges Bauteil mit einem massiven Querschnitt über seine gesamte Länge ist, und das äußere Bauteil (36) ein röhrenförmiges Bauteil ist, das einen ringförmigen Querschnitt über seine gesamte Länge hat und sich in bezug auf das stabförmige Bauteil koaxial erstreckt.

3. Steuerstab nach Anspruch 1 oder 2, dadurch gekennzeichnet, daß die giftigen Bereiche (38, 42) jedes der inneren und äußeren Bauteile (34, 36) ausschließlich aus einem schwarzen giftigen Material bestehen und die ungiftigen Bereiche (40, 44) von jedem der inneren und äußeren Bauteile (34, 36) ausschließlich aus einem ungiftigen Material bestehen.

4. Steuerstab nach Anspruch 1, 2 oder 3, dadurch gekennzeichnet, daß das hohle äußere Bauteil (36) stationär gehalten ist, wenn sich der Steuerstab (32) in seiner in dem Steuerstabführungsrohr (14) eingefügten Position befindet.

5. Steuerstab nach Anspruch 4, dadurch gekennzeichnet, daß das hohle äußere Bauteil (36) stationär gehalten ist durch eine ringförmige Buchse (56), die in einer festen Position in dem Steuerstabführungsrohr (14) in dessen unterem Teil angeordnet ist, wobei die ringförmige Buchse (56) mit dem benachbarten Ende (50) des hohlen äußeren Bauteiles (36) zusammenwirkt, um das letztere zu unterstützen und ein Loch (60) bildet, das groß genug ist, um dem inneren Bauteil (34) zu gestatten, sich durch dieses beweglich zu erstrecken.

6. Steuerstab nach Anspruch 5, dadurch gekennzeichnet, daß die ringförmige Buchse (56) oberhalb eines in dem Steuerstabführungsrohr (14) ausgebildeten Dämpfers (58) angeordnet ist.

FIG. 1

FIG. 2

14

3

56

3

60

58

FIG. 4

51

38

34

40

38

40

38

40

38

48

46

5

5

FIG. 6

42

44

36

42

44

42

44

42

44

42

7

7

50

FIG. 3

14

56

60

FIG. 5

38

34

FIG. 7

36

42

FIG. 8

FIG. 9

FIG. 10

FIG. 11

FIG. 12

11